Europäisches Patentamt

European Patent Office

Office européen des brevets

(11) Publication number: **0 110 948**

**B1**

(12) **EUROPEAN PATENT SPECIFICATION**

(45) Date of publication of patent specification: **08.04.87**

(51) Int. Cl.⁴: **G 01 N 25/00**, G 01 N 31/12

(21) Application number: **83901842.1**

(22) Date of filing: **02.06.83**

(86) International application number:
**PCT/SE83/00219**

(87) International publication number:
**WO 83/04310 08.12.83 Gazette 83/28**

(54) METHOD OF ANALYSING CARBON AND CARBON COMPOUNDS.

| | |
|---|---|
| (30) Priority: **04.06.82 SE 8203472** | (73) Proprietor: **INSTITUTET FÖR METALLFORSKNING**<br>**Drottning Kristinas väg 48**<br>**S-114 28 Stockholm (SE)** |
| (43) Date of publication of application:<br>**20.06.84 Bulletin 84/25** | |
| | (72) Inventor: **HALLBERG, Mats Ake**<br>**Sunneplan 13**<br>**S-123 43 Farsta (SE)**<br>Inventor: **HUSBY, Kjell-Ole**<br>**Hälsingegatan 9**<br>**S-113 23 Stockholm (SE)** |
| (45) Publication of the grant of the patent:<br>**08.04.87 Bulletin 87/15** | |
| (84) Designated Contracting States:<br>**BE DE FR GB LU NL SE** | |
| | (74) Representative: **Ekelöf, Carl Herman et al**<br>**H ALBIHNS PATENTBYRA AB Box 7664**<br>**S-103 94 Stockholm (SE)** |
| (56) References cited:<br>**EP-A-0 052 988**<br>**DE-A-3 043 313**<br>**GB-A-1 180 668**<br>**GB-A-1 502 261**<br>**GB-A-2 049 178**<br>**US-A-3 065 060**<br>**US-A-3 618 374**<br>**US-A-4 229 412** | |

Courier Press, Leamington Spa, England.

## Description

The present invention relates to a method and apparatus for selective analysis of carbon and carbon compounds on heat resistant materials and compositions of materials in respect of their content of carbon and hydrogen. The method is particularly suited to the determination of oil, grease and carbon residues on the surface of different inorganic objects, e.g. metallic objects. It is of importance to know the quantity and kind of substances on the surface of objects, particularly carbon and carbon compounds, since they can have a large effect, e.g. on corrosion properties and the possibility of applying surface coatings.

In surface coating it is particularly of great importance that objects are very well cleaned before the surface is coated. A poorly cleaned metal surface often leads to the adhesion ability of the surface coating being reduced and the properties of the surface-coated product being deteriorated. There is thus a large technical and industrial need of quantitative and qualitative determination of surface contaminations on metal surfaces.

In cold forming, such as rolling, wire and tube drawing of steel, copper and copper alloys, aluminium and aluminium alloys and other metals as well, different lubricants are used to reduce friction against the tool. After cold forming, the metal surfaces are usually cleaned by degreasing and pickling or annealing the routine determination and control of the effects of different cleaning methods is also of great interest here.

It has been found that the methods used for routine surface analysis of carbon and carbon compounds on metal surfaces do not give satisfactory results. The present invention therefore covers an important technical and industrial requirement.

Methods and apparatus for analysing carbon residues on metal surfaces have been developed lately (1979), a technique being utilized in which carbon and carbon compounds are oxidized in pure oxygen gas at 180°C and then again at 600°C with subsequent oxidation of the formed volatile carbon compounds with copper(II) oxide or barium chromate, the carbon dioxide formed being measured coulometrically or with a variety of known analytic methods. With this technique one can differentiate between pure carbon and organic compounds which are easy to drive off.

In organic elementary micro analysis information may be obtained as to the exact quantity ratios between different ingoing elements, which means that the total quantity e.g. of carbon or hydrogen is measured using gravimetric, coulometric or other suitable methods. Oxidation always takes place at high temperature so that the entire sample is completely combusted.

In accordance with the present invention there is proposed a novel method of analysing carbon and carbon compounds on the surface of objects by oxidation in the presence of a passing gas containing oxygen, with subsequent determination of the water vapor and carbon dioxide content of the gas. The method is characterized by the material being placed in a first oven in which in a heating step the temperature is raised at a regulated rate of 0,05 to 10°Cs$^{-1}$ and by the content of water vapor and carbon dioxide of the passing gas being registered continuously with respect to the quantity and in relation to the temperature in the first oven. Before registration the gas is caused to pass through a second oven containing an oxidation catalyst at a temperature over 500°C, after which the gas is cooled to a suitable constant temperature at which registration can be performed.

The novel method enables selective analysis of carbon and the nature of the carbon compounds, which is of great importance for industrial applications, where oil residues, for example, may present completely different problems from graphite residues in such surface coatings of metals as enameling.

In controlled heating of an object, volatile carbon compounds will first be vaporized at different temperatures depending on the composition of the compound. The vaporized compound will be entrained by the gas and taken over to the second oven where carbon and hydrogen in the vaporized carbon compound will be oxidized to water vapor and carbon dioxide.

The gas containing water vapor and carbon dioxide thus obtained is then cooled to a lower constant temperature. This temperature is decided by what temperature can be accepted when the water vapor and carbon dioxide are registered. As the temperature increases, different carbon compounds with different volatility will be successively vaporized and oxidized and transferred by the carrier gas to the apparatus for registering water vapor and carbon dioxide. At high temperature carbon in the form of graphite will be directly oxidized and carbon monoxide thus formed will be transformed into carbon dioxide in the second oven, which is maintained at constant high temperature.

Registration of the water and carbon dioxide contents of the gas can be performed in several ways known per se.

Measurement of the water quantity can be made by coulometric measurement, e.g. in a Keidel cell. Measurement may also be made by measuring the conductivity, infrared absorption or variations in capacitance.

Measurement of the carbon dioxide content can be made with similar methods, such as conductometry, coulometry or infrared absorption technique.

If conductometry is used, a carbon dioxide-containing gas is taken down into a sodium hydroxide solution, for example, and variations in conductivity measured. Using carbon or calcium carbide, water can be converted to an equivalent quantity of carbon dioxide and measured as such.

With coulometry changes in the pH value can be measured if the carbon dioxide is taken down into a barium perchlorate solution, information as to the quantity of carbon dioxide in the gas thus being provided. Water vapor may be lead into a Keidel cell, in which platinum wires with phosphor pentoxide electrolize water to hydrogen and oxygen at a given applied voltage. The measured electrolysis current corresponds to the quantity of water vapor.

It is also possible to measure infrared absorption at given wavelengths for gases flowing out from oven or furnace chambers.

Water vapor may be continuously measured with a dew-point-meter by measuring changes in conductivity or capacitance across an aluminium oxide layer.

All the foregoing described measuring methods may be performed with commercially available instruments, amongst which may be mentioned gas chromatographs measuring thermal conductivity, e.g. Hewlett Packard Model HP 185. Keidel cells are manufactured by Salzer-Labormatik/Wöshleff. Apparatus for infrared absorption are manufactured by Leybold-Heraeus and Beckman Instruments, while apparatus for measuring changes in conductivity or capacitance are made by Endress-Hanser GmbH+Co and Moisture Control & Measurement Ltd (MCM).

The invention also includes an apparatus for carrying out the inventive method. In its simplest form, such apparatus comprises a first oven provided with heating means controlled by a regulating device, and with an oven chamber for the passage of a gas containing oxygen, there also being means for supplying oxygen-containing gas and the insertion of a test object. By "oxygen-containing" gas is intended a gas containing at least 8 % molecular oxygen. The apparatus also includes a second oven in which a constant high temperature can be maintained at between 500 and 1200°C, the oven chamber here being provided with an oxidation catalyst, the nature of which determines the appropriate temperature, and which may comprise copper(II)oxide, barium chromate, cobalt (II, III) oxide, dissolution products of silver permanganate, nickel oxide or tin (IV) oxide. The apparatus further comprises means arranged after the second oven for cooling the passing flow of gas, means for continuously measuring the quantity of water and carbon dioxide present in the passing flow of gas after cooling and means for continuously registering the measured values obtained in relation to the temperature of the first oven.

The first and second ovens may also be put together, it then being necessary to make sure that there is sufficient insulation between appropriate parts of the ovens.

The oven space in both ovens or oven parts suitably comprises an inert or resistant material such as quarts glass tubes or other material having corresponding resistance, in which a sample holder of inert material can be placed. Alternatively, the test object can be placed directly in the quarts glass tube. Means for the supply of oxygen-containing gas are arranged outside the heat zones in the ovens so that the gas is caused to flow through both ovens or oven parts. Instead of quarts glass, certain types of stainless steel may be used to advantage, especially such steel having a high chromium content.

According to one embodiment, the oven space is formed as a chamber to which inert gas is supplied. Departing inert gas is mixed with oxygen containing gas in another space in the oven, the total gas mixture being then transferred to the second oven containing the oxidation catalyst, where the entire quantity of carbon is turned into carbon dioxide and the hydrogen present is turned into water vapor.

More information can be obtained if the analysis is supplemented by a method where the test sample is protected from contact with the oxygen-containing gas during heating to about 800°C with inert gas, the aforementioned embodiment being utilized. By the test sample being heated in the absence of oxygen possible volatile compounds will be vaporized and possibly cracked, subsequent to which they are transferred to another chamber and mixed in gas form there with oxygen-containing gas and are oxidized completely.

It is also possible to heat the test object to 800°C in inert gas first, and subsequently cool it to a temperature under 200°C and finally raise the temperature at a regulated rate with oxygen-containing gas flowing in contact with the test object. In this way the oxidation of non-volatile compounds can be separated from compounds which are volatile at the same temperature.

In addition to carbon and hydrogen it is, of course, also possible to analyze the gas from the ovens in respect of other substances and compounds in the cases where it is desired to obtain further information.

Gas is taken from the second oven via a conduit to a cooling means for indirect cooling to about room temperature and further to both detectors for water and carbon dioxide. The conduit is suitably provided with a flowmeter, possibly coupled to a pen recorder. Output data from the detectors is registered conventionally on a pen writer or in some other way, and on an integrating meter for obtaining content totals if so desired.

The result obtained will be denoted on a recorder as the registered quantity of water and carbon dioxide, respectively, in relation to the time or temperature in the first oven. The graph for carbon dioxide will have crests corresponding to the vaporization or oxidation temperature for carbon and carbon compounds in the first oven. In a corresponding way, hydrogen liberated from the test object will be registered as water at the vaporization or oxidation temperature for hydrocarbon compounds or molecular hydrogen that are possibly present.

After some trial activity, one skilled in the art can read from the graphs obtained particulars about carbon and carbon compounds on the test objects, which has not been possible with previously known testing methods and testing equipment.

The invention will now be described in detail with reference to the accompanying drawings illustrating preferred embodiments of the apparatus in accordance with the invention and wherein

Figure 1 schematically illustrates an apparatus in accordance with the invention,

Figure 2 illustrates the implementation in detail of the oven chamber in a first oven,

Figure 3 an example of a graph obtained on a pen recorder, and

Figure 4 an example of a graph obtained if the test object is heated in an inert atmosphere.

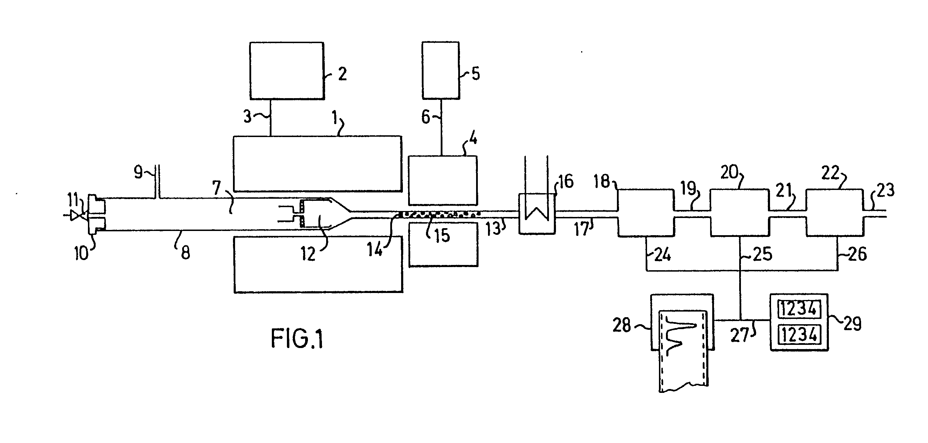

Figure 1 illustrates a first oven 1 provided with a control unit 2, regulating via a line 3 the temperature rise in the oven 1 to 0,05—10°Cs⁻¹, and a second oven 4 regulated by a control unit 5 via a line 6. The oven chamber in the first oven 1 comprises a tube 8 provided with an inlet 9 for oxygen-containing gas, and a removable closer means 10 in which an aperture 11 serves as a pressure regulator. In the oven chamber 7 there is indicated a sample holder 12 which can be inserted into the oven chamber 7 after removing the removable closer means 10. When in use, supplied gas is caused to flow through the oven chamber 7 at a rate such that the gas volume in the chamber is changed 1—60 times per min. The oven chamber 7 is defined relative the oven chamber 13 in the second oven 4 by a constriction 14 in the form of a glass filter. A bed 15 of oxidation catalyst is placed in the oven chamber 13. A constant temperature of about 600°C is kept in the oven 4 when barium chromate is used as an oxidation catalyst. The oven chamber 13 extends outside the oven 4 to a cooling space 16. The gas is cooled to room temperature in this space. After cooling the gas is lead consecutively to a flowmeter 18 via a conduit 17, a water detector 20 via conduit 19 to a carbon dioxide detector 22 via a conduit 21 and finally to the atmosphere via a conduit 23. The conduit 23 may be provided with a non-return valve (not shown). Measurement signals are taken via the lines 24, 25, 26 and 27 to a pen writer 28 and to an integrating device 29 with a digital display.

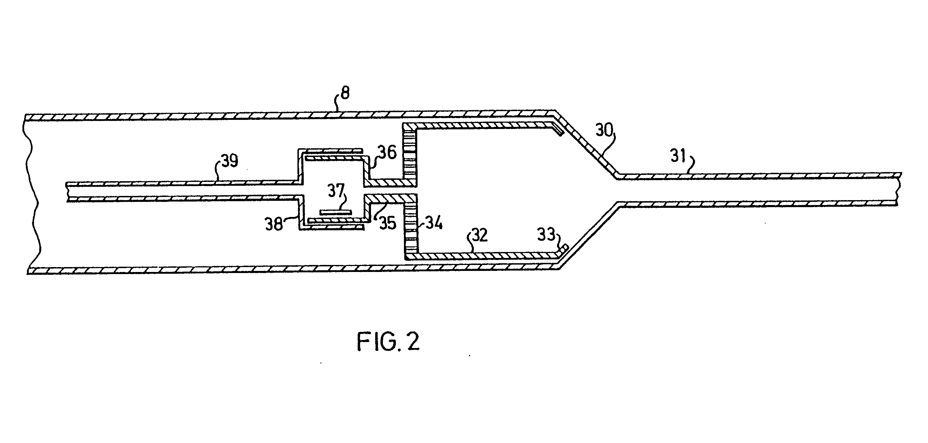

The oven chamber 7 in Figure 1 is illustrated in Figure 2. The tube 8 of Figure 1 is provided with a tapering portion 30 and a discharge outlet 31 through which the gas will be taken to an oven chamber corresponding to the oven chamber 13 of Figure 1. In the interior of the tube 8 there is arranged the tubular portion 32 with a bevel 33 snuggly fitting the tapering portion 30 of the tube 8. At its end remote from the bevel 33 the part 32 is provided with a filter 34, in the centre of which there is adapted a tube 35 provided with an expanded portion 36 at its end remote from the part 32. A sample holder 37 is illustrated in this expanded portion 36. A further quarts tube 38 surrounding the expanded portion 36 is also arranged in the tube 8. Inert gas may be led to this tube 38 via a conduit 39, said gas also coming into the expanded portion 36, whereby oxygen can be excluded from the sample or test piece during a part of the heating process, when the inventive method is utilized.

With an apparatus according to Figure 2 it is possible to separate compounds, which are volatile at a given temperature, from compounds which are not volatile but which can be oxidized at the same temperature. The filter 34 coacts to provide good mixing of the oxygen-containing gas and carbon compounds vaporized in the inert gas. Water possibly present in the test object will of course be vaporized and detected in the water detector without being oxidized.

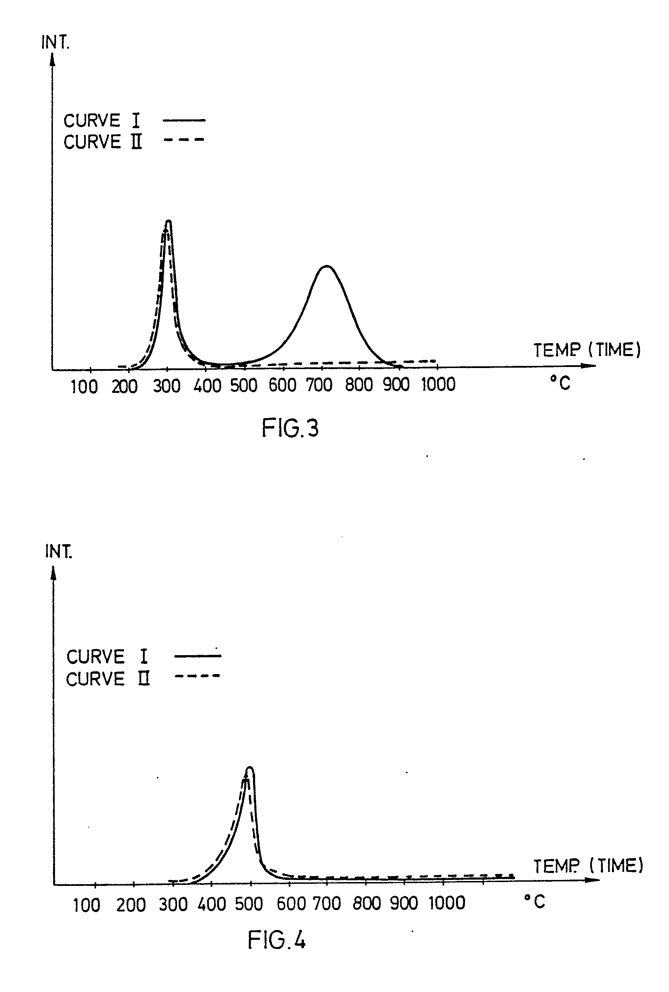

Graphs are shown in Figure 3 indicating the result if the analysis of a metal object is carried out with oxygen-containing gas, there being contaminants of both graphite and oil on its surface. From the curve I will be seen the result of the carbon dioxide registration on the y axis as intensity (the absolute value not being denoted on the axis), as a function of time or the temperature in the first oven and, in this connection, also of the temperature increase in the first oven, this temperature being denoted on the x axis. The graph II illustrates in a similar way the result of the water detection. Two crests will clearly be seen at 300°C, caused by the oil residues, and a crest only on the carbon dioxide curve illustrating the oxidation of graphite at about 700°C.

Finally in Figure 4 there are shown graphs denoting the result of an analysis of a metal sample in an inert gas, there being contaminants of both graphite and oil on its surface. Graphs I and II correspond tothe graphs in Figure 3. In this case the sample is placed in the rear portion of the sample holder and is thus heated in inert gas, in this case argon. Since graphite is a non-volatile substance, there is no crest on graph I at 700°C, but only crests resulting from the presence of oil. In this case the crests are displaced to 400—500°C, illustrating that different mechanisms prevail for heating in atmospheres of oxygen-containing gas and inert gas.

### Claims

1. A method of analysing carbon and carbon compounds on heat resistant materials and in composite materials, containing carbon and hydrogen, by oxidation of carbon and hydrogen with a gas containing oxygen and determining the water vapour and carbon dioxide contents of the gas, characterized in that test material is placed in a first oven made from heat resistant material in which in a heating step the temperature is raised such that a regulated rate of temperature rise of 0,05 to 10°Cs⁻¹ is obtained and in that the test material is subjected to a passing inert gas which is free from carbon and hydrogen, this gas furthermore containing oxygen or is supplied with oxygen after passing the test material, the gas containing oxygen being caused to pass a second oven containing an oxidation catalyst and at a temperature of over 500°C, in that the gas is subsequently cooled to a constant temperature suitable for analyzing the gas, after which the water vapour and carbon dioxide contents of the gas are continuously determined and registered in relation to the temperature in the first oven.

2. Method as claimed in claim 1, characterized in that the first oven made from heat resistant material is provided with an oven chamber of quarts in which the gas is caused to flow over the test material during the regulated heating of the first oven.

3. Method as claimed in claim 1, characterized in that the passing gas is prevented from coming into contact with the test material during a portion of the regulated heating, by inert gas forming a protective layer round the test material.

4. Apparatus for carrying out the method in accordance with claims 1—3, carbon and hydrocarbon compounds being oxidized by a passing gas containing oxygen, which apparatus comprises a first oven unit (1) including an oven chamber (7) with room for the test material which is to be analyzed, characterized in that the apparatus further comprises means (9) for supplying oxygen-containing gas, means (12) for insertion of the material in the oven chamber (7), means (2) for regulated increase of the temperature of the first oven by 0,05 to $10°Cs^{-1}$, a second oven (4) intended for maintaining a constant temperature of between 500 and 1200°C, depending on an oxidation catalyst (15) inserted in an oven chamber (13) in the second oven, means (16) arranged after the second oven for cooling the passing flow of gas, means (20, 22) for continuously measuring the quantity of water and carbon dioxide present in the passing flow of gas after cooling and means (28, 29) for continuously registering the measured values obtained in relation to the temperature in the first oven.

5. Apparatus as claimed in claim 4, characterized in that the oven chamber (7) in the first oven (1) is formed as a quarts glass tube (8) in which the test material is placed enclosed in an inner space (36, 38), said inner space being adapted such that inert gas can be supplied to it for preventing direct contact with the passing flow of oxygen-containing gas.

6. Apparatus as claimed in claim 4, characterized in that a constriction (14) of the gas flow is arranged between the oven chamber (7) in the first oven and the oven chamber (13) in the second oven, said constriction preferably being provided by a glass filter (34) arranged between the oven chambers (7, 13).

**Patentansprüche**

1. Verfahren zur Bestimmung von Kohlenstoff und Kohlenstoffverbindungen auf hitzebeständigen Materialien und in Verbundwerkstoffen, die Kohlenstoff und Wasserstoff enthalten, durch Oxidation von Kohlenstoff und Wasserstoff mit einem Sauerstoff enthaltenden Gas und Bestimmung der Wasserdampf- und Kohlendioxidgehalte im Gas, dadurch gekennzeichnet, daß man das Testmaterial in einen Ofen, hergestellt aus hitzebeständigem Material, einbringt, in dem in einer Erhitzungsstufe die Temperatur so erhöht wird, daß man eine gesteuerte Temperaturhöhung von 0,05 bis $10° Cs^{-1}$ erhält und daß man das Testmaterial einem durchfließendem Inertgas aussetzt, das frei von Kohlenstoff und Wasserstoff ist, jedoch Sauerstoff enthält oder mit Sauerstoff nach Passieren des Testmaterials versehen wird, dann das Sauerstoff enthaltende Gas durch einen zweiten Ofen leitet, der einen Oxidationskatalysator enthält und auf eine Temperatur über 500° C erhitzt ist, und anschließend das Gas auf eine konstante Temperatur, die zur Analyse des Gases geeignet ist, abkühlt und danach die Wasserdampf- und Kohlendioxidgehalte in Beziehung zu der Temperatur im ersten Ofen kontinuierlich bestimmt und registriert.

2. Verfahren nach Anspruch 1, dadurch gekennzeichnet, daß der erste, aus einem hitzebeständigen Material hergestellte Ofen eine Ofenkammer aus Quarz aufweist, in der das Gas während der gesteuerten Erhitzung des ersten Ofens veranlaßt ist, über das Testmaterial zu strömen.

3. Verfahren nach Anspruch 1, dadurch gekennzeichnet, daß das durchgeleitete Gas während eines Teils der gesteuerten Erhitzung durch Inertgas, das um das Testmaterial eine Schutzschicht bildet, gehindert ist mit dem Testmaterial in Kontakt zu kommen.

4. Vorrichtung zur Durchführung des Verfahrens nach Anspruch 1 bis 3, bei dem Kohlenstoff und Kohlenstoffverbindungen durch ein durchgeleitetes, Sauerstoff enthaltendes Gas oxidiert werden, die einen ersten Ofen (1), einschließlich einer Ofenkammer (7) mit Raum für das zu analysierende Testmaterial, umfaßt, dadurch gekennzeichnet, daß die Vorrichtung ferner umfaßt eine Einrichtung (9) zum Einbringen des Sauerstoff enthaltenden Gases, eine Einrichtung (12) zum Einbringen des Testmaterials in die Ofenkammer (7), eine Einrichtung (2) zur gesteuerten Erhöhung der Temperatur des ersten Ofens um 0,05 bis $10° Cs^{-1}$, einen zweiten Ofen (4), vorgesehen zur Aufrechterhaltung einer konstanten Temperatur zwischen 500 und 1200° C, die abhängt von dem Oxidationskatalysator (15), den man in die Ofenkammer (13) des zweiten Ofens (4) eingebracht hat, eine Einrichtung (16), die nach dem zweiten Ofen (4) angeordnet ist, zur Kühlung des durchgeleiteten Gasstromes, Einrichtungen (20, 22) zur kontinuierlichen Messung der Wassermenge und der Menge an Kohlendioxid, die in dem durchgeleiteten Gasstrom nach der Kühlung enthalten sind, und Einrichtungen (28, 29) zur kontinuierlichen Registrierung der gemessenen Werte, die man in Bezug zur Temperatur im ersten Ofen erhält.

5. Vorrichtung nach Anspruch 4, dadurch gekennzeichnet, daß die Ofenkammer (7) im ersten Ofen (1) als Quarzglasrohr ausgebildet ist, in das das Testmaterial eingebracht und eingeschlossen in einem Innenraum (36, 38) ist, wobei der Innenraum so gestaltet ist, daß Inertgas in den Innenraum geleitet werden kann, um zu verhindern, daß das Testmaterial direkt mit dem durchgeleiteten Sauerstoff enthaltenden Gas in Berührung kommt.

6. Vorrichtung nach Anspruch 4, dadurch gekennzeichnet, daß eine Verengung (14) des Gasstromes zwischen der Ofenkammer (7) in dem ersten Ofen und der Ofenkammer (13) in dem zweiten Ofen angeordnet ist, wobei die Verengung vorzugsweise ein Glasfilter (34) ist, das zwischen den Ofenkammern (7, 13) angeordnet ist.

**Revendications**

1. Procédé de dosage du carbone et des composés du carbone dans des matériaux résistant à la chaleur et dans des matériaux composites, contenant du carbone et de l'hydrogène, par oxydation du carbone et de l'hydrogène avec un gaz contenant de l'oxygène et détermination des teneurs en vapeur d'eau et en anhydride carbonique du gaz, caractérisé en ce que le matériau d'essai est placé dans un premier four constitué d'un matériau résistant à la chaleur dans lequel, dans un premier stade de chauffage, la température est élevée de telle façon que l'on obtienne une vitesse régulée d'augmentation de la température de 0,05 à 10°Cs⁻¹, et en ce que le matériau d'essai est soumis à un passage de gaz inerte qui est exempt de carbone et d'hydrogène, ce gaz contenant en outre de l'oxygène, ou est additionné d'oxygène après être passé sur le matériau d'essai, le gaz contenant de l'oxygène étant envoyé dans un second four contenant un catalyseur d'oxydation et à une température supérieure à 500°C, en ce que le gaz est ensuite refroidi à une température constante convenant pour l'analyse du gaz, après quoi les teneurs en vapeur d'eau et en anhydride carbonique du gaz sont déterminées en continu et enregistrées en rapport avec la température dans le premier four.

2. Procédé selon la revendication 1, caractérisé en ce que le premier four constitué d'un matériau résistant à la chaleur est muni d'une chambre de four en quartz dans laquelle on fait écouler le gaz sur le matériau d'essai au cours du chauffage régulé du premier four.

3. Procédé selon la revendication 1, caractérisé en ce que le gaz traversant est empêché de venir au contact du matériau d'essai au cours d'une partie du chauffage régulé, par un gaz inerte formant une couche protectrice autour du matériau d'essai.

4. Appareil pour appliquer le procédé selon les revendications 1 à 3, les composés du carbone et de l'hydrogène étant oxydés par un gaz traversant contenant de l'oxygène, lequel appareil comprend une première unité de four (1) comportant une chambre de four (7) d'un volume suffisant pour le matériau d'essai à analyser, caractérisé en ce que l'appareil comprend en outre des moyens (9) pour fournir un gaz oxygéné, des moyens (12) pour l'insertion du matériau dans la chambre de four (7), des moyens (2) pour une augmentation régulée de la température du premier four à raison de 0,05 à 10°Cs⁻¹, un second four (4) destiné à maintenir une température constante entre 500 et 1200°C, suivant le catalyseur d'oxydation (15) introduit dans la chambre de four (13) du second four, des moyens (16) disposés après le second four pour refroidir le courant de gaz, des moyens (20, 22) pour mesurer en continu la quantité d'eau et d'anhydride carbonique présente dans le courant de gaz après refroidissement et des moyens (28, 29) pour enregistrer en continu les valeurs mesurées obtenues en fonction de la température dans le premier four.

5. Appareil selon la revendication 4, caractérisé en ce que la chambre de four (7) du premier four (1) est formée d'un tube de verre au quartz (8) dans lequel le matériau d'essai est placé, enfermé dans un espace intérieur (36, 38) cet espace intérieur étant conçu de telle sorte que le gaz inerte puisse être envoyé dans celui-ci pour empêcher un contact direct avec le courant de gaz oxygéné.

6. Appareil selon la revendication 4, caractérisé en ce qu'un étranglement (14) du courant de gaz est disposé entre la chambre de four (7) du premier four et la chambre de four (13) du second four, cet étranglement étant de préférence constitué d'un filtre de verre (34) disposé entre les chambres de four (7, 13).

FIG.1

1234
1234

FIG. 2

FIG.3

FIG.4